**Europäisches Patentamt**

**European Patent Office**

**Office européen des brevets**

(19)

(11) Veröffentlichungsnummer: **0 264 877**
**A2**

(12) **EUROPÄISCHE PATENTANMELDUNG**

(21) Anmeldenummer: **87115252.6**

(22) Anmeldetag: **19.10.87**

(51) Int. Cl.4: **B01D 17/02** , C02F 1/40 ,
//E03F5/16

(30) Priorität: **24.10.86 IT 2213886**

(43) Veröffentlichungstag der Anmeldung:
**27.04.88 Patentblatt 88/17**

(84) Benannte Vertragsstaaten:
**AT BE CH DE ES FR GB LI LU NL SE**

(71) Anmelder: **Friwa, Zeiss-Neutra Umwelttechnik
AG**
**Lindaustrasse 27**
**CH-8307 Lindau (Schweiz)(CH)**

(72) Erfinder: **Reinhard, Ernst**
**Rotackerstrasse 50**
**CH-8304 Wallisellen(CH)**

(74) Vertreter: **Scheidegger, Zwicky, Werner & Co.**
**Stampfenbachstrasse 48 Postfach**
**CH-8023 Zürich(CH)**

(54) **Vorrichtung zum Abscheiden und Rückhalten nicht gelöster Kohlenwasserstoffe aus Wasser.**

(57) Die Vorrichtung umfasst einen als Grobabscheider dienenden Behälter (20), von dem aus das nicht gelöste Kohlenwasserstoffe enthaltende Wasser in einen Behälter (1) gelangt, der als Koaleszenzabscheider mindestens eine Barriere (11) aus Polyesterfasern enthält und die den Behälter (1) quer zur Strömungsrichtung durchsetzt. Dieses Material bewirkt die als Koaleszenz bezeichnete Abscheidung durch das Zusammenschliessen kleinerer Tröpfchen zu grossen Tropfen, die nach oben steigen. Eine weitere Barriere (10), die aus Polyethylen-Spänen besteht, kann der Barriere (11) vorgeschaltet sein und dient zum Zurückhalten von - schwebenden Feststoffen und zum Schutz der nachgeschalteten Barriere (11).

EP 0 264 877 A2

Fig. 1

## Vorrichtung zum Abscheiden und Rückhalten nicht gelöster Kohlenwasserstoffe aus Wasser

Die Erfindung betrifft eine Vorrichtung zum Abscheiden und Rückhalten nicht gelöster Kohlenwasserstoffe aus Wasser, mit einem Behälter, der einen Einlass für das Kohlenwasserstoff-Wasser-Gemisch auf der einen Behälterseite und einen Auslass für das Wasser auf der gegenüber liegenden Behälterseite aufweist, und in dem zwischen Einlass und Auslass eine quer zur Strömungsrichtung den Behälter senkrecht durchsetzende Barriere aus einem die Abscheidung durch Koaleszenz bewirkenden Material angeordnet ist.

Bekannt sind sogenannte Schwergewichts-Oel-Abscheider zum Abscheiden von Oel aus Abwasser in Gewerbebetrieben, bei denen jedoch wegen der relativ hohen Fliessgeschwindigkeit des Oel-Wasser-Gemisches innerhalb des Behälters und der infolgedessen vorhandenen Turbulenz die Wirksamkeit der Abscheidung sehr unbefriedigend ist. Damit die nicht gelösten Kohlenwasserstoffe infolge des geringeren spezifischen Gewichts nach oben steigen können, muss die Strömung im Behälter extrem verlangsamt werden. Um das Abwasser in die Kanalisation einleiten zu können, muss der Wert der im ablaufenden Wasser noch tolerierten Kohlenwasserstoffe unter 10 mg pro Liter gesenkt werden.

Um die Strömung in einer Abscheidevorrichtung dieser Art zu verlangsamen, ist es bereits bekannt, in den Behälter Barrieren hineinzustellen, die aus einem Material bestehen, mit welchem eine als Koaleszenz bezeichnete Wirkung erzielt wird, was bedeutet, dass kleinere Oeltröpfchen sich zu grösseren Tropfen zusammenschliessen und dann nach oben steigen. Die bisher bekann ten Barrieren benötigten jedoch einen verhältnismässig grossen Volumenanteil des Behälters, da in Strömungsrichtung mehrere Barrieren hintereinander geschaltet werden mussten, um mit dem zur Verwendung gelangenden Material, aus dem die Barriere besteht, die notwendige Abscheidewirkung zu erzielen, bei der nicht mehr als 10 mg Kohlenwasserstoffe pro Liter im Abwasser enthalten sind.

Ziel der vorliegenden Erfindung ist, diesen Wert des Kohlenwasserstoffanteils im Wasser noch deutlicher zu unterschreiten und dies mit einem in der Wirksamkeit besseren Material zu erreichen, das einen wesentlich geringeren Raum innerhalb des Behälters beansprucht, so dass die Vorrichtung sich konstruktiv vereinfachen lässt und ein günstiges Kosten-Nutzen-Verhältnis erzielbar ist. Dieses Ziel wird erfindungsgemäss dadurch erreicht, dass die Barriere aus Polyesterfasern besteht. Vorzugsweise sind die Polyesterfasern in Form einer Matte in einem Käfig gehalten, der auswechselbar in dem Behälter angeordnet ist.

Man benötigt also nur noch eine Barriere, was den Vorteil bringt, dass der konstruktive Aufwand für die Anordnung der Matte in einem Käfig bedeutend geringer ist, dass ein geringeres Materialvolumen für die Barriere benötigt wird, um das gleiche Ergebnis zu erzielen, welches mit bekannten Vorrichtungen erreichbar ist. Schliesslich ist auch von Vorteil, dass nach dem Unbrauchbarwerden der Barriere nur wenig Material, aus dem die Barriere besteht, beseitigt oder vernichtet werden muss, so dass die Umwelt weniger belastet wird.

In zweckmässiger Weise kann zusätzlich noch in Strömungsrichtung vor der Barriere aus Polyesterfasern eine Filter-Barriere aus Polyethylen-Spänen angeordnet sein, die zum Zurückhalten von schwebenden Feststoffen dient und somit die nachgeschaltete Barriere aus Polyesterfasern - schützt.

Ein Ausführungsbeispiel der Vorrichtung mit einer zusätzlichen Barriere zum Festhalten von - schwebenden Feststoffen vor der Barriere aus Polyesterfasern wird nachfolgend anhand der Zeichnungen näher beschrieben. Es zeigen:

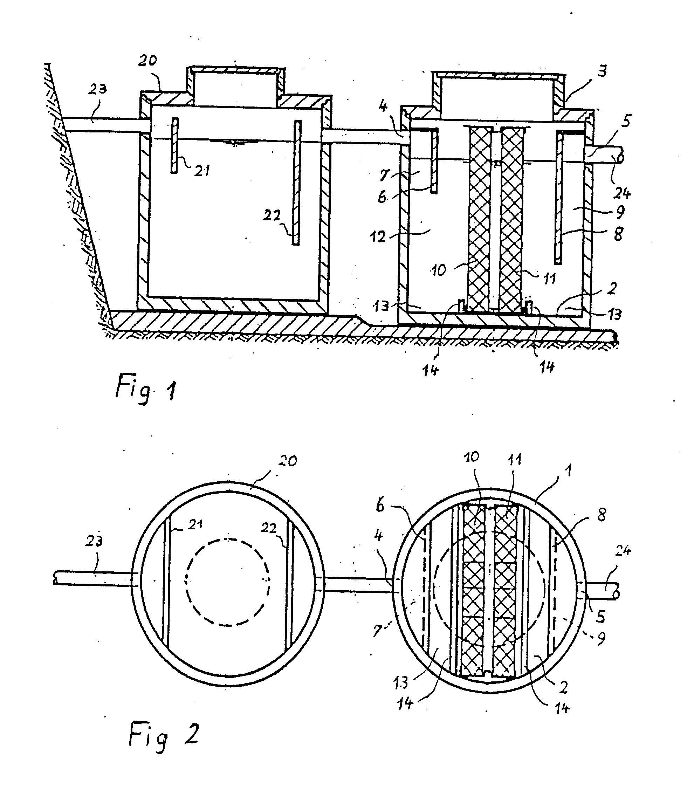

Fig. 1 einen Vertikalschnitt durch die Vorrichtung;

Fig. 2 eine Ansicht der Vorrichtung gemäss Fig. 1 von oben, ohne die Behälterdeckel.

Die Vorrichtung weist einen stehenden zylindrischen Behälter 1 auf, der einen ebenen Boden 2 besitzt und durch einen aus mehreren Teilen bestehenden Deckel 3 abgeschlossen ist. An den einander gegenüber liegenden Seiten des Behälters 1 sind ein Einlassrohr 4 und ein Auslassrohr 5 angeschlossen. Eine nur im oberen Teil des Behälters 1 durch diesen sich quer hindurch erstreckende Tauchwand 6 trennt einen angrenzend an das Einlassrohr 4 befindlichen Vorfangraum 7 von dem übrigen Behälterinnenraum. Das in den Behälter 1 einströmende Gemisch aus Wasser und nicht gelösten Kohlenwasserstoffen fliesst zunächst in diesen Vorfangraum 7.

Im Abstand von dem auf der gegenüber liegenden Behälterseite befindlichen Auslassrohr 5 erstreckt sich eine weiter nach unten reichende Tauchwand 8 quer durch den Behälter 1 hindurch, welche einen Auslassraum 9 von dem übrigen Behälterinnenraum abtrennt.

Der Behälter 1 ist in der Mitte zwischen der Einlasseite und der Auslasseite durch eine erste Barriere 10 und eine zweite Barriere 11 unterteilt, die quer zur Strömungsrichtung zwischen Einlasseite und Auslasseite und den Behälter 1 senkrecht durchsetzend angeordnet sind. Die Barriere 11 besteht aus Polyesterfasern und ist die wesentliche Barriere, in welcher aufgrund der Koaleszenzwirkung durch Zusammenschliessen von kleineren zu grösseren Tropfen, die nach oben steigen, die Abscheidung der Kohlenwasserstoffe erfolgt. Die vorgeschaltete zu lösen und die zu ihrem Schutz zusätzlich vorgesetzte Barriere 10 enthält Polyethylen-Späne und dient zum Zurückhalten - schwebender Feststoffe und somit zum Schutz der nachgeschalteten Barriere 11. Diese Barriere würde auch allein genügen, um die erfindungsgemässe Aufgabe Barriere 10 kann auch fehlen, hat aber den Vorteil, dass die Barriere 11 länger ihre ihr zugedachte Funktion erfüllt.

Die für die Barriere 11 verwendeten Polyesterfasern sind bei einer Temperatur von 20 - 40° C sehr gut gegen Mineralsäuren, Schwefelsäure und Salzsäure beständig. Auch gegen Alkalien ist das Material beständig sowie gegen Bakterien und Pilze, besonders gut aber gegen Kohlenwasserstoffe aller Art wie Benzin usw. beständig.

In dem Raum 12 vor der ersten Barriere 10 erfolgt eine Beruhigung der in dem Behälter 1 eingeleiteten Flüssigkeit und mitgeführte Feststoffe, an welche sich die Kohlenwasserstoffe teilweise anlagern, sinken nach unten in den auf dem Behälterboden 2 vorhandenen Schlammraum 13. Damit dieser sich dort sammelnde Schlamm nicht in die Barrieren 10 und 11 gelangt, sind auf dem Behälterboden 2 quer durch den Behälter 1 sich erstreckende Schienen 14 auf beiden Seiten der beiden Barrieren 10 und 11 angeordnet. Auch auf der Seite der Auslassleitung 5 sammelt sich auf dem Behälterboden in einem dort ebenfalls vorhandenen Schlammraum 13 eine wenn auch geringere Menge Schlamm an.

Vor dem Behälter 1 mit den darin angeordneten Barrieren 10 und 11 ist ein weiterer gleich ausgebildeter Behälter 20 angeordnet, der als Grobabscheider dient und ebenfalls Tauchwände 21 und 22 aufweist, aber keine Barrieren enthält. Das die Kohlenwasserstoffe enthaltende Wasser strömt durch eine Leitung 23 in den Behälter 20 hinein und verlässt diesen Behälter über das die Verbindung zwischen den beiden Behältern bildende Einlassrohr 4 des Behälters 1. Das von den Kohlenwasserstoffen befreite Wasser verlässt den Behälter 1 über ein Rohr 24 und gelangt in einen in der Zeichnung nicht dargestellten Kontrollschacht, von dem es in die Kanalisation oder in ein Sammelbecken geleitet wird.

**Ansprüche**

1. Vorrichtung zum Abscheiden und Rückhalten nicht gelöster Kohlenwasserstoffe aus Wasser, mit einem Behälter, der einen Einlass für das Kohlenwasserstoff-Wasser-Gemisch auf der einen Behälterseite und einen Auslass für das Wasser auf der gegenüberliegenden Behälterseite aufweist und in dem zwischen Einlass-und Auslass eine quer zur Strömungsrichtung den Behälter senkrecht durchsetzende Barriere aus einem die Abscheidung durch Koaleszenz bewirkenden Material angeordnet ist, dadurch gekennzeichnet, dass die Barriere (11) aus Polyesterfasern besteht.

2. Vorrichtung nach Anspruch 1, dadurch gekennzeichnet, dass die Polyesterfasern der Barriere (11) als Matte in einem Käfig enthalten sind, der auswechselbar im Behälter (1) angeordnet ist.

3. Vorrichtung nach Anspruch 1, dadurch gekennzeichnet, dass in Strömungsrichtung vor der Barriere (11) aus Polyesterfasern eine Filter-Barriere aus Polyethylen-Spänen zum Zurückhalten - schwebender Feststoffe angeordnet ist.

4. Vorrichtung nach Anspruch 3, dadurch gekennzeichnet, dass auf dem Behälterboden (2) an beiden Seiten neben den bis zum Behälterboden sich erstreckenden Barrieren (10,11) Schienen (14) angeordnet sind, die je einen Schlammraum (13) am Behälterboden begrenzen und zum Schutz der Barrieren gegen Zutritt von Schlamm dienen.

Fig 1

Fig 2